# EUROPEAN PATENT APPLICATION

(11) **EP 1 369 980 A1**
(43) Date of publication of application: **10.12.2003**
(21) Application number: 02425363.5
(22) Date of filing: 31.05.2002
(51) Int. Cl.: H02K 15/095

(54) **Method for winding a multi-pole stator and winding machine**

(71) Applicant: ATOP S.p.A., 50021 Barberino Val d'Elsa (Firenze) (IT)
(72) Inventor: Ponzio, Massimo, 50021 Barberino V. Elsa (FI) (IT)
(74) Representative: Celestino, Marco

(57) **Abstract**

The method relates to winding a multi-pole stator (1), having a ferromagnetic sheets core stack (3), an axis of symmetry (2) and a plurality of radially extending poles. The centring step in a winding station, with respect to shroud means, comprises arranging the stator (1) in the winding station near at least a shroud (10) and a winding flier (14), relatively aligning the midplanes of the stator (2) and the shroud (12); winding the stator by the flier and the shroud means with symmetric opening/closing the shroud with respect to the midplane of the stator. The alignment can be obtained by integral relative translation of the stator and the shroud means. Alternatively, the alignment can be obtained by independent closing/opening of two semi-shrouds that form the shroud means, whereby the two semi-shrouds are located symmetrically with respect to the midplane of said stack of sheets.

## Description

### Field of the invention

The present invention relates to the field of stator winding machines, and precisely it relates to a method for winding multi-pole stators.

Furthermore, the invention relates to an apparatus that carries out this method.

### Background of the invention

Outwardly spooled multi-pole stators are known, formed by a substantially star-shaped stack of sheets featuring a plurality of poles extending from a tubular core. The stators of this type are suitable for coupling with an inner concentric armature or outer ring armature. they are common in brushless motors.

The peripheries of the poles, or pole extensions, form substantially a cylinder with a plurality of slits parallel or oblique with respect to the axis of the stator. The peripheries of the poles are connected to the core by means of pole walls that define corresponding grooves, accessible through the slits. The grooves have to be filled with insulated lead wire, by creating coils spooled about the pole walls.

At winding, where possible, the wire must pass necessarily through the slits for entering the grooves, and has to be guided to avoid collisions against the edges of the grooves. to this purpose, exist winding machines having an winding arm, or flier, which rotates causing the wire a circular trajectory and creating thus the coil of each pole. The wire follows the circular trajectory while it is guided in the slits by means of special winding shrouds.

The shrouds are normally of two types, usually enough to wind the most common outwardly spooled multi-pole stators:
- - a couple of lateral guiding plates, which form substantially a channel that aids the wire to enter the slits; hits are thus avoided of the wire against the edges of the poles adjacent to the pole being wound;
- - a shroud that allows the wire to overtake the pole making substantially a double slide guide that deviates the wire from its own circular trajectory and brings it to wind about the pole wall. The shroud normally is mounted on a support shaft, that is co-axial to the flier and is movable towards/away from the axis of the stator, for laying uniformly the wire helically about the pole wall.

The flier, at winding, rotates about the support shaft of the shroud in order to have its free end needle that moves in orbital position both with respect to the pole being wound and to the shroud that guides the wire in the grooves.

The wire is spooled about the pole with the aid of a shroud whose shielding portion has two semi-shrouds that move with respect a body integral to the support shaft. The two semi-shrouds skim over the stator so that the wire is laid in an optimal way.

Therefore, for causing the flier and the shrouds to work correctly, at the high speed provided for automatic production lines, the stator must be located suitably in the winding station.

Presently, automatic systems exist for locating the stator in the winding station, comprising means that put the stator on a support at a predetermined height responsive to the height of the stack of sheets.

However, starting from a standard height of the stack of ferromagnetic sheets, the actual height is subject to errors.

For example, if the machine that counts the ferromagnetic sheets, used for making the stack of a stator, makes an error by excess or by defect, this error causes unavoidably a variation of the height of the stack same.

Another possible error is due to the different compression of the stack of ferromagnetic sheets owing to, for example, defects of construction of the sheets same.

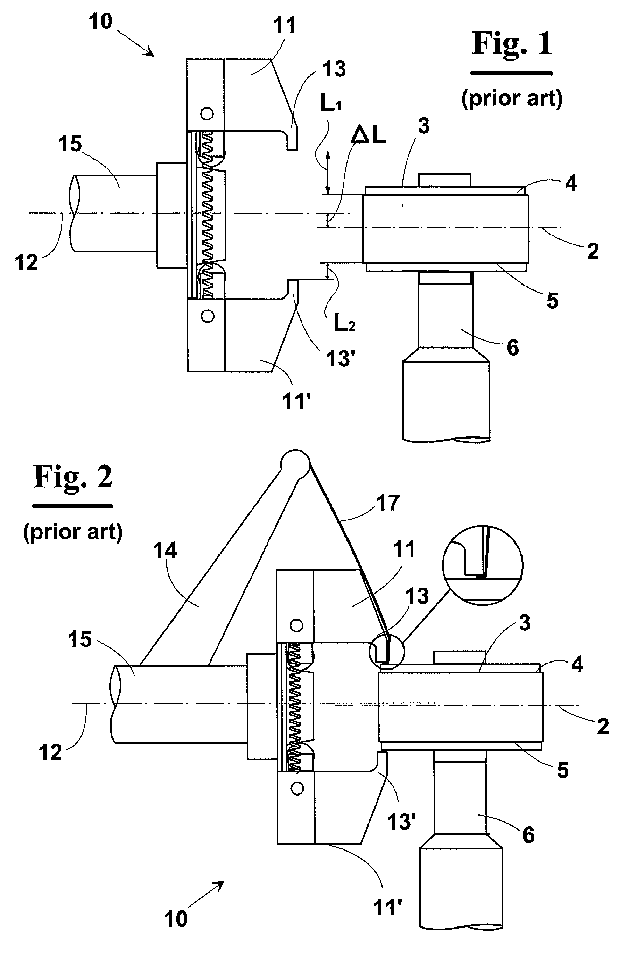

In these cases, then, there is a variability on the stack height of 1 mm and more. As shown in figure 1 (described in detail later), the variability on the stack height causes a misalignment between the midplane of the shroud and the midplane of the stator.

Therefore, when the wire has size less than the size deviation of the stack height, winding problems arise, among which:
- jamming of the wire between the semi-shrouds and the stator, obliging the operators that control the process to intervene immediately on the machines at stop, for cutting the jammed wire and rejecting the workpiece with subsequent costs and loss of time;
- bad filling rate, in case the wire does not jam, due to not controllable inclination of the coils, with bad final quality of the product.

In addition to the problem of size tolerance, moreover, parts with different nominal stack height, even if within a predetermined range, are worked with difficulty. This problem is in particular felt where, in a same production campaign, stators of different stack height must be worked without stopping the production, called "mixed flow" production, and the machines are operated completely by a computer. In fact, even if shrouds capable of opening and closing on the stator are used, however, the problem remains of misalignment between the midplane of the shroud and of the stator that occurs when the stack height is changed. Also in this case, in particular, the misalignment creates a space between shroud and stator, at one side, impairing the slot filling and causing jamming.

### Summary of the invention

It is an object of the present invention to provide an automatic winding method of stators in a winding station that allows the stators to centre with respect to the axis of symmetry of the shrouds.

It is a particular object of the present invention to provide a method for winding stators that eliminates the problem of wire jamming between the end of the shrouds and a face of the stator same, during the winding step .

It is another particular object of the present invention to provide a method for winding stators that allows to obtain a better quality of the product reducing the work rejection rate.

It is a further object of the present invention to provide a method for centring stators in a winding station that allows multi-pole stators to be spooled with different nominal stack height, even if within predetermined limits.

These and other objects are obtained by the method for centring a multi-pole stator, having a stack of ferromagnetic sheets, an axis of symmetry and a plurality of radially extending poles, in a winding station, with respect to shroud means, according to the present invention, comprising the steps of:
- arranging the stator in the winding station near at least a shroud means and a winding flier;
- relatively aligning the midplanes of the stator and the shroud means;
- winding the stator by the flier and the shroud means with opening/closing symmetric of the shroud with respect to the midplane of the stator.

A first advantageous embodiment of the method, according to the invention, comprises the further steps of:
- measuring the actual height of the stack of sheets of the stator;
- arranging the stator in a winding station near at least a shroud means and a winding flier, said stator being arranged on a support movable parallel to the axis of the stator;
- aligning the midplane of the stator, by the means for supporting, with the midplane of the shroud means;
- winding the stator by the flier and the shroud means, with opening/closing symmetric of the shroud with respect to the midplane of the stator.

Advantageously, a preliminary measuring step of the height of the face of reference of the stator is made with optical sensor means.

The method, according to the present invention, eliminates the possibility that sum of tolerances or small size differences on the stack height affect both the location of the stator in the winding station and the winding same.

Winding the wire about a pole of the stator is made by a rotatable arm guided by the shroud in many steps. Advantageously, after every layer deposited about the stator, the two parts of the shroud move away symmetrically in a direction orthogonal to their axis of symmetry. This combination assures that the stator is centred with respect to the shroud for all the spooled wire step about the poles.

Alternatively, a second embodiment of the method, according to the invention, provides that the shroud means has two semi-shrouds capable of asymmetrically closing/opening, with respect to the midplane of the support of the shroud same.

Therefore, the two semi-shrouds are located symmetrically with respect to the stator, even if the midplane of the support is shifted with respect to the midplane of the stator.

According to another aspect of the invention, a device that carries out the method for centring a multi-pole stator, having a with a stack of ferromagnetic sheets, an axis of symmetry and a plurality of radially extending poles, in a winding station, with respect to shroud means, comprises:
- stator winding means and shroud means, wherein the shroud means can be opened/closed symmetrically with respect to the midplane of the stator;
- means for arranging the stator in a winding station near at least a shroud means and a winding flier;
- means for relatively aligning the midplane of the stator with the midplane of the shroud means.

In a first embodiment of the device, the following are provided, in addition:
- sensing means for measuring the actual height of the stack of sheets of the stator;
- means for supporting the stator to provide the alignment of the midplane of the stator and the midplane of the shroud means.

In this case, the device that carries out the method, according to the present invention, comprises a control unit that receives a measuring signal and is operatively connected to means for actuating the support and means for actuating the shaft of the shrouds.

A second different embodiment of the device comprises means for opening/closing the shrouds, independent from one another.

In particular, the opening/closing step of the shrouds independently can be effected by actuators in turn independent, which operate responsive to sensors that detect the approach to the stator during the asymmetrical opening/closing movement.

In particular, such means for opening/closing the shrouds comprise a wedge element formed by two semi-wedges that can be operated independently.

### Brief description of the drawings

Further characteristics and the advantages of the method according to the invention will be made clearer with the following description of an embodiment thereof, exemplifying but not limitative, with reference to the attached drawings, wherein:
- figures 1 and 2 respectively show the location of a stator in a winding station and the jamming of a spooled wire between an end of the shrouds and the stator, according to the prior art;
- figure 3 shows a preliminary measuring step of the height of a face of reference of a stator, as provided by the method according to the invention;
- figures from 4 to the 8 show successive winding phases of the wire about a pole of a stator according to the method of the invention;
- figures from 9 to the 11 show successive centring steps of a multi-pole stator, in the case of asymmetrical opening/closing movement of the shroud means, according to an alternative embodiment.

### Description of a preferred embodiment

Figure 1 shows the method of location of a multi-pole stator 1 in a winding station, according to the prior art. Stator 1 has a core formed by a stack of ferromagnetic sheets 3 of known nominal height, having a midplane 2 and a plurality of poles (not shown) that radially extend defining grooves between them.

Stator 1 is located with its midplane 2 parallel to a midplane 12 of a shroud 10, which is capable of moving radially towards stator 1 and of guiding the wire 17 during the winding step about a pole of stator 1.

The vertical location of stator 1 is made by a support 6 adjustable orthogonally with respect to the midplane 2, responsive to the nominal stack height. In presence of deviations of the stack of sheets 3 from the nominal value, the plane 2 of stator 1 and the plane 12 of shroud 10 are shifted of a distance ΔL.

In particular, always with reference to figure 1, the end 13 of a first portion 11 of shroud 10 is located at a distance L₁, with respect to the corresponding reference face 4 of stator 1, less than a distance L₂, between end 13' of a second part 11' of shroud 10, taken with respect to the corresponding reference face 5.

Such a location of shroud 10 with respect to stator 1 has the drawback of jamming wire 17, at the end 13 or 13', obliging the operator to stop the machine with subsequent loss of time and decrease of productivity. A minor drawback, but equally to be avoided, is that the wire 17 can be guided incorrectly by shroud 10, owing to the space between shroud 10 and stator 1, which causes a bad filling and lower quality.

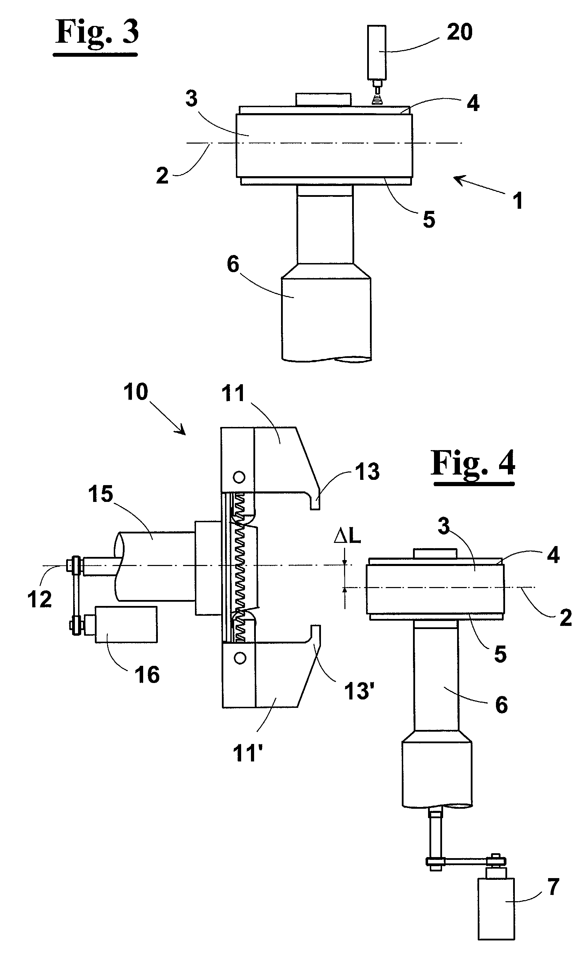

Figure 3 shows a preliminary step of a first embodiment of the method, according to the present invention, wherein the height of stator 1 is measured on a reference face 4 by a sensor 20.

The preliminary measure allows to calculate the deviation ΔL of figure 4 of stator 1, in order to lower/raise it at a height to align the midplane 2 of stator 1 with the midplane 12 of shroud 10.

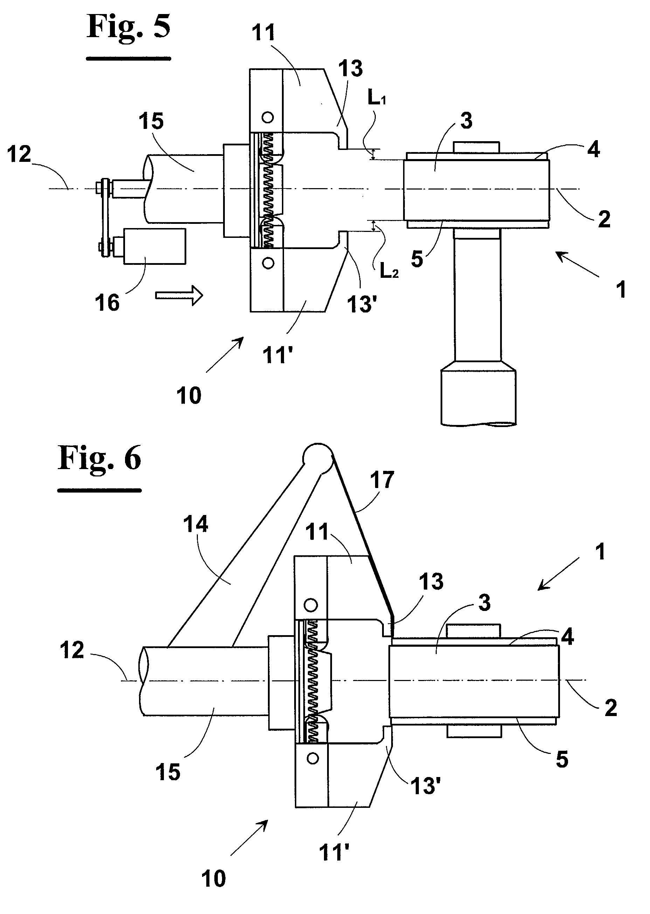

This way (figure 5) the distance L₁, between the end 13 of shroud 10 and the respective reference face 4, and the distance L₂, between the end 13' of shroud 10 and the respective reference face 5, coincide perfectly. Therefore, the position of auto-centring shroud 10 can be calculated, being the distance L₁=L₂ the least possible, so that the end 13 and 13' practically "skim" over the faces 4 and 5 of stator 1 when a first layer of wire 17 (figure 6) is spooled. A jamming of wire 17 during the winding step is thus impossible, as instead shown in figure 2.

Figures 6,7 and 8 show the steps of winding wire 17 about a pole of stator 1.

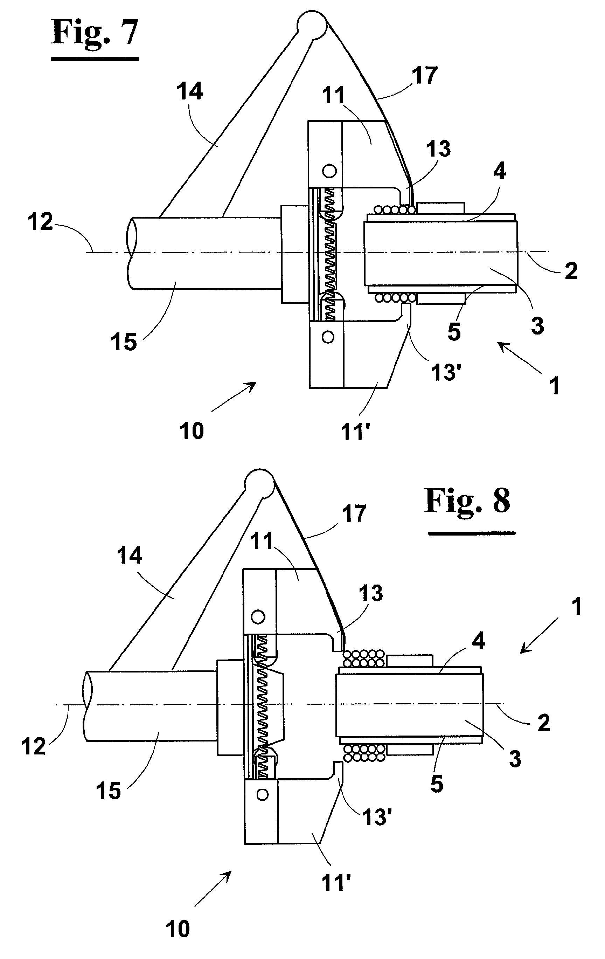

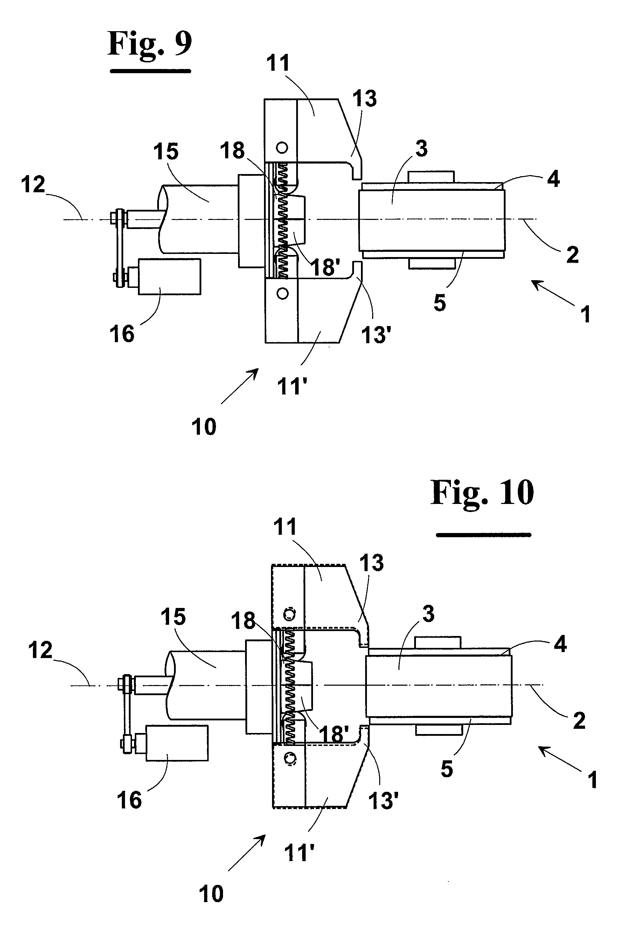

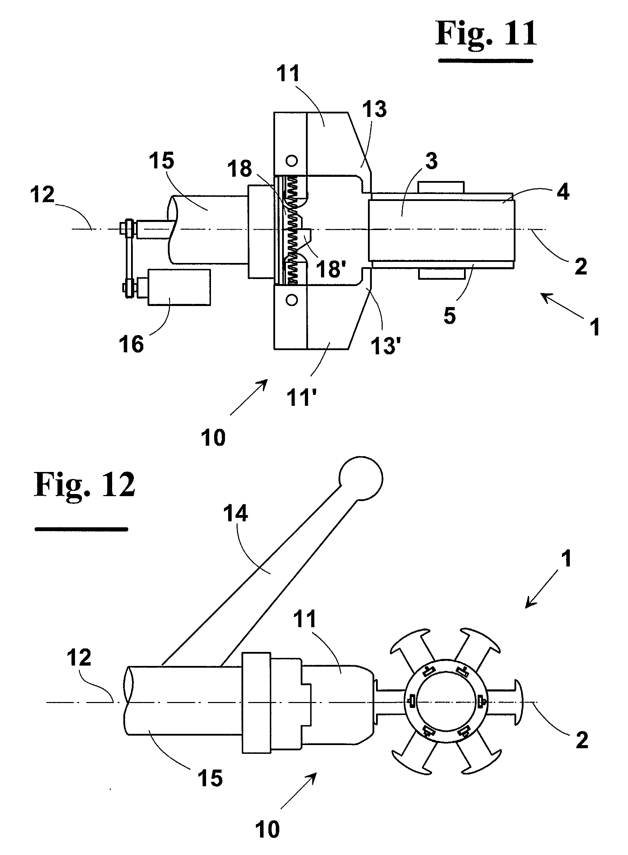

In the first step (figure 6) shroud 10 is approached radially to stator 1 and is juxtaposed to the respective pole, not yet spooled with wire 17. Then, (figure 7) after having spooled a first layer of wire about the pole of stator 1, semi-shrouds 11 and 11' move away from each other symmetrically in a direction orthogonal to plane 12. This step is repeated at every next layer winding, as shown for second layer in figure 8.

Therefore, during all the winding steps auto-centring stator 1 is kept still with respect to shroud 10, and then the risk of jamming wire 17 is avoided for all the spooling step.

A second different embodiment of the method, shown in figures from 9 to the 11, provides a multi-pole stator 1 whose alignment is achieved by a shroud 10, comprising two semi-shrouds 11 and 11' equipped with asymmetrical movement with respect to the midplane 12 of the support. This asymmetrical movement of the two semi-shrouds 11 and 11' is operated by two semi-wedge elements 18 and 18', which move independently. Therefore, stator 1 is centred by approaching symmetrically, in a first step, two semi-shrouds 11 and 11' to stator 1 up to when semi-shroud 11' reaches face 5 of the stack of sheets 3. Then, the stator 1 is further centred, with respect to shroud 10, moving back semi-wedge element 18 and causing the semi-shroud 11 to reach face 4. This step is obtained blocking semi-wedge element 18', and then semi-shroud 11', in the previous position.

Notwithstanding reference has been made above to two preferred embodiments, the method, according to the present invention can be carried out using alternative solutions. For example, the midplane of the shrouds 12 and the midplane of the stator 2 can be aligned by providing on support 15 of the shrouds, and/or on the shrouds same, actuator means movable orthogonally to the midplane 12.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Method for winding a multi-pole stator, said stator having a stack of sheets with a midplane parallel to said sheets, said stator being arranged in a winding station next to shroud means and to a winding flier, **characterised in that** it comprises the steps of:
- relative movement of said stator with respect to said shroud means in order to locate the midplane of said stack of sheets symmetrically with respect to said shroud means;
- winding said stator by said flier and said shroud means with symmetric opening/closing of said shroud means with respect to said midplane.

2. Method for winding a multi-pole stator, according to claim 1, wherein said relative movement of said stator and of said shroud means occurs orthogonally to said midplane and is obtained by relative translation of said stator and said shroud means in order to locate said stack of sheets symmetrically with respect to said shroud means.

3. Method for winding a multi-pole stator, according to claim 2, wherein the following steps are also provided:
- measuring the actual height of said stack of sheets of the stator,
- moving, responsive to said measure, said stator and said shroud means relative to each other.

4. Method for winding a multi-pole stator, according to claim 1, wherein said shroud means comprises a support and two semi-shrouds capable of closing/opening with respect to said support, said relative movement being caused by said semi-shrouds equipped with independent closing/opening movement with respect to said a support, whereby said two semi-shrouds are located symmetrically with respect to said midplane of said stack of sheets.

5. Method for winding a multi-pole stator, according to claim 3, wherein a measuring step is provided of the approach of said semi-shrouds to said stator in said independent movement of opening/closing.

6. Winding machine of a multi-pole stator, said stator having a stack of sheets with a midplane parallel to said sheets, said stator being arranged in a winding station next to a winding flier and to shroud means, **characterised in that:**
- said shroud means can be opened/closed with respect to said stator and means are provided for locating said shroud means symmetrically with respect to said midplane of said stator.

7. Winding machine of a multi-pole stator, according to claim 6, comprising furthermore:
- sensing means for measuring the actual height of the stack of sheets of the stator;
- means for supporting said stator;
- means for moving said means for supporting relatively to said stator for displacing said stator with midplane arranged symmetrically with respect to said shroud means.

8. Winding machine of a multi-pole stator, according to claim 7, wherein a control unit is provided that receives a measuring signal and is operatively connected to said means for moving said means for supporting.

9. Winding machine of a multi-pole stator, according to claim 6, wherein said shroud means comprise two semi-shrouds capable of independently closing/opening with respect to said stator, whereby the two semi-shrouds are located symmetrically with respect to said midplane of the stack of sheets of said stator.

10. Winding machine of a multi-pole stator, according to claim 9, wherein each of said semi-shrouds is associated to sensors that detect the approach to said stator in said independent opening/closing movement.

11. Winding machine of a multi-pole stator, according to claim 9, wherein the movement of opening/closing said semi-shrouds is operated by two independent actuators.

12. Winding machine of a multi-pole stator, according to claim 11, wherein the movement of opening/closing said semi-shrouds is operated by a wedge element formed by two semi-wedges that can be operated independently, wherein the integral movement of the two semi-wedges creates an opening symmetric with respect to a midplane of the two semi-shrouds, whereas the shifted movement of the two semi-wedges causes said midplane to displace with respect to the midplane of said stack of sheets.
